# EUROPEAN PATENT APPLICATION

(11) **EP 1 587 321 A2**
(43) Date of publication of application: **19.10.2005**
(21) Application number: 05102264.8
(22) Date of filing: 22.03.2005
(51) Int. Cl.: H04N 7/167

(54) **Common scrambling**

(30) Priority: 26.03.2004 US 811030
(71) Applicant: MICROSOFT CORPORATION, Redmond, WA 98052 (US)
(72) Inventor: Robert, Arnaud, 98052, Redmond (US); Kotzenberg, Bernhard G., 98052, Redmond (US); Acton, Colin Lee, 98052, Redmond (US); Alkove, James, 98052, Redmond (US); Hofmeyr, Jan, 98052, Redmond (US); Gates, Matthijs A., 98052, Redmond (US); Pritchett, Thaddeus C., 98052, Redmond (US)
(74) Representative: Grünecker, Kinkeldey, Stockmair & Schwanhäusser Anwaltssozietät

(57) **Abstract**

A transport stream is encrypted in such a manner that the stream may be processed without requiring encrypted portions of the stream to be decrypted. Thus, an analysis is performed on the stream to determine at least one portion of the stream that is to pass unencrypted, thus enabling the stream to be processed in a manner that bypasses encrypted portions of the stream.

## Description

### FIELD

The present invention is directed towards the common scrambling of transport streams.

### BACKGROUND

Media content, as received from a content source, is typically protected. In order to be processed at a client device, the protection must be removed from the media content. Although removing the protection is necessary for rendering the media content, removing the protection is not economical in terms of resource management or security for other processes to be performed on the media content.

Protected media content includes encrypted audio/video data that is broadcasted via television signals, transmitted over a network connection, or downloaded from a storage medium. The encrypted media content may be received and processed at client devices such as a set-top box (STB) or a personal computer (PC). However, for processes other than rendering, decrypting media content on the client device occupies substantial device resources and thus compromises robust device performance. Further, if the client device is connected to a network, as is increasingly the case for STBs and almost always the case for PCs, decrypting media content on the client device renders the media content vulnerable to piracy and other security breaches.

The aforementioned performance and security deficiencies have gone unresolved, which is particularly distressing as STBs and PCs are emerging as comprehensive media centers within homes and other subscriber locations. For example, before a multiplexed transport stream is able to be demultiplexed into various elementary streams (*e.g.,* audio and video elementary streams) at a client device, any encryption applied to the multiplexed transport stream must be removed. Thus, the client device's functionality as a robust and secure repository for video files, audio files, or picture files is compromised. Similarly, before the media content in a transport stream is able to be indexed at a client device, any encryption applied to the transport stream must be removed as well. Thus, the client device's functionality as a robust and secure personal video recorder (PVR) and player is also compromised.

Accordingly, solutions are sought for enabling efficient and safe processing of media content provided in transport streams.

### SUMMARY

Common scrambling of portions of transport streams is described herein.

More particularly, a transport stream is encrypted in such a manner that the stream may be processed (*e*.*g*. demultiplexed, indexed) without requiring encrypted portions of the stream to be decrypted. To do so, an analysis is performed on the stream to determine at least one portion of the stream that is to pass unencrypted, thus enabling the stream to be processed in a manner that bypasses encrypted portions of the stream.

### BRIEF DESCRIPTION OF THE DRAWINGS

The detailed description is described with reference to the accompanying figures.

FIG. 1 shows a broadcast environment in which example embodiments of common scrambling techniques may be implemented.

FIG. 2 shows an example of processing incorporating common scrambling.

FIG. 3 shows a block diagram corresponding to an apparatus that implements common scrambling according to an example embodiment.

FIG. 4 shows a packetized transport stream in accordance with an example embodiment.

FIG. 5 illustrates a general computer network environment which can be used to implement the techniques described herein.

### DETAILED DESCRIPTION

Described herein are common scrambling techniques that enable a transport stream to be processed without being descrambled. More particularly, the embodiments described herein relate to an analysis that is performed to enable the aforementioned processing.

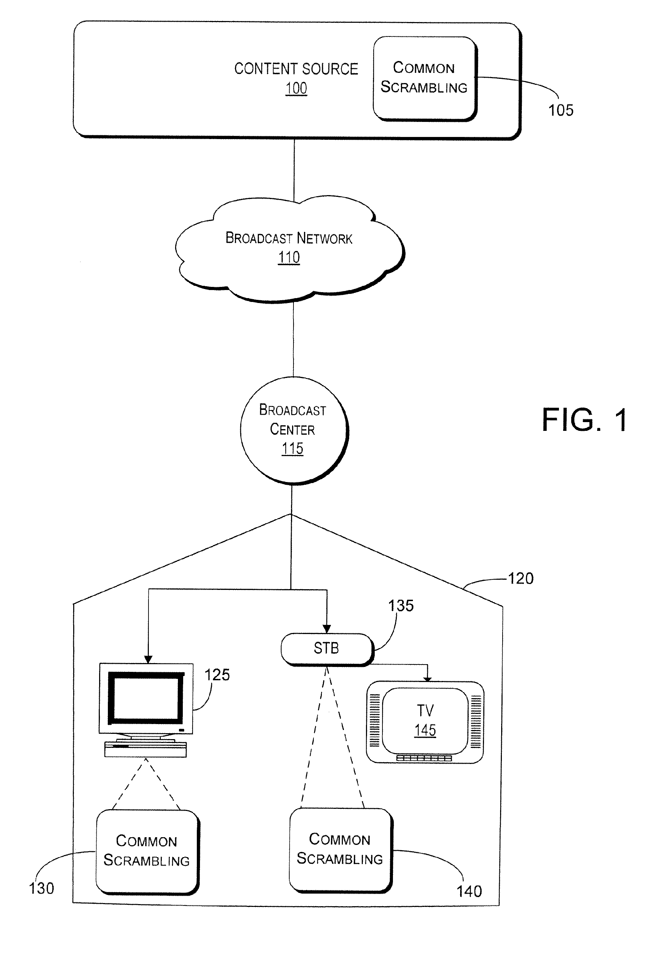

FIG. 1 shows a broadcast/transmission environment in which example embodiments of common scrambling techniques may be implemented. More particularly, content source 100 may apply common scrambling 105 to a transport stream that is distributed to subscribers via broadcast network 110 and/or broadcast center 115. Alternatively, whether or not content source 100 applies common scrambling 105 to a transport stream, PC 125 may also apply common scrambling 130 to a transport stream received at subscriber location 120; or STB 135 may also apply common scrambling 140 to a transport stream received at subscriber location 120.

Examples of broadcast network 110 include cable television (CATV) networks and direct broadcast satellite (DBS) networks. Broadcast center 115, also referred to as a "head-end," is a centrally-located facility within a respective community in which various media programming is received from, *e.g.*, a CATV or DBS downlink, and packaged for transmission to subscriber location 120. Broadcast center 115 may be coupled to content source 100 and other such broadcast centers directly, via broadcast network 110, or by the Internet using TCP/IP (Transmission Control Protocol/Internet Protocol) or other standard communication protocols.

At subscriber location 120, PC 125 and STB 135 receive media signals from content source 100 via broadcast network 110, broadcast center 115, or the Internet. Media signals processed and rendered on PC 125 may be displayed on a monitor associated with PC 125; and media signals processed and rendered on STB 125 may be displayed on television (TV) 145 or similar display device.

Alternatively, TV 145 may have the capabilities of STB 135 integrated therein. Also, although current implementations include a one-to-one correspondence between STB 135 and TV 145, efforts are ongoing to have a single, comprehensive STB 135 provide media content for multiple units of TV 145 in receiver location 120. Such comprehensive STB 135 may also include all capabilities of a video gaming console. Similar development efforts are ongoing for a comprehensive PC 125.

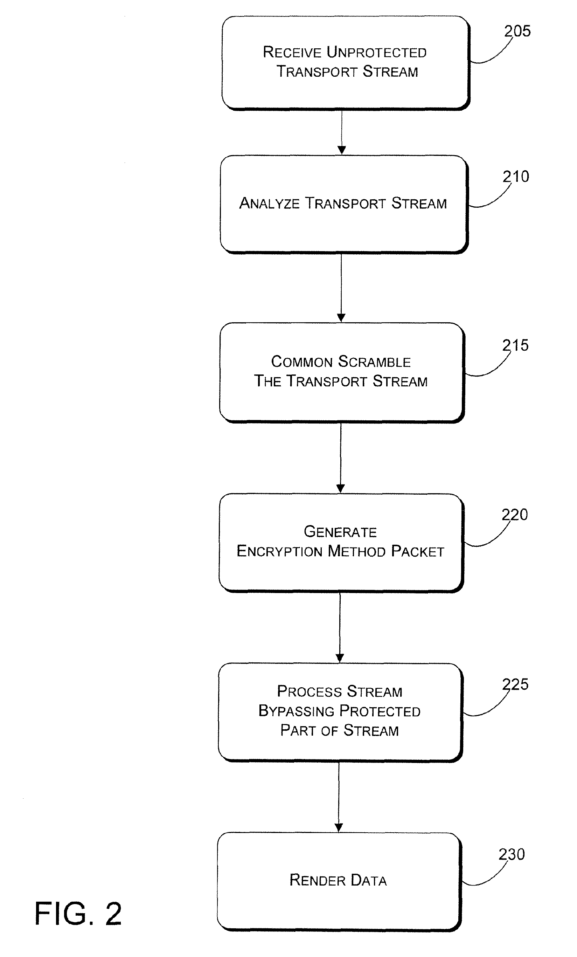

FIG. 2 shows an example flow of actions incorporating common scrambling that may be executed at one or any combination of content source 100, broadcast network 110, head-end 115, or subscriber location 120 (by at least one of PC 125 and STB 135). Though various changes and modifications will become apparent to those skilled in the art from the present description, including changes and modifications to the order of actions, the example of FIG. 2 may be applicable to the common scrambling examples of FIG. 1, *i.e.,* common scrambling 105 at content source 100, common scrambling 130 at PC 125, and common scrambling 140 at STB 135.

As used herein, the terms "media signals," "media content," and "content" may be used interchangeably, and are broadly construed to include video and/or audio content, pictures, animations, text, *etc.* that may be included in the applications and software programs that are compiled, designed, and programmed at content source 100 and transmitted to at least one of PC 125 and STB 135 located at subscriber location 120. Accordingly, content source 100 may correspond to video game servers, websites, video servers, music servers, software archives, databases, television networks, etc.

Further, the example embodiments described herein relate to media content in transport streams being compressed in accordance with the MPEG-2 compression standard. MPEG-2 is a compression standard by which digital media content is compressed on storage mediums (*e.g.*, CDs and DVDs) and for broadcast by multiple systems operators (MSOs), such CATV and DBS systems. However, it is noted that applications relating to digital media content are increasing (*e.g.*, PVR and video-on-demand (VOD)) as is the corresponding need for transmission bandwidth. Therefore, the example embodiments described herein may also relate to media content in transport streams being compressed in accordance with advanced compression standards that are being developed to provide, within existing data transport infrastructures, sufficient bandwidth for digital media content corresponding to the increasing number of applications for digital media content. Alternatively, the example embodiments may also relate to media content on storage mediums compressed in accordance with existing and/or advanced compression standards including, but not limited to, MPEG-4 and H.264. Since MPEG-2 is a packetized compression standard, the example embodiments described herein are described in terms of packetized transport streams, though the embodiments are by way of example only and are not intended (nor should they be construed) to be limiting.

In FIG. 2, block 205 indicates an action to receive an unencrypted transport stream. At content source 100, a media content transport stream may take form as an unencrypted stream of media content before being transmitted therefrom. At any subsequent location, whether at broadcast network 110, head-end 115, or subscriber location 120 (utilizing at least one of PC 125 and STB 135), an encrypted transport stream has its encryption removed according to the example embodiments described herein.

Block 210 indicates an action to analyze the unencrypted transport stream. In particular, the unencrypted transport stream is analyzed in view of data requirements for at least one process to which the transport stream may be subjected after being encrypted. If the determination is made based upon a statistical model corresponding to one or more of the processes, threshold data requirements may be determined for the particular process that has the most extensive (*i.e.*, threshold) data requirements. The analysis at block 210 is performed to determine which portions of the transport stream are to pass unencrypted.

Examples of processes to which the transport stream may be subjected after being encrypted include, but are not limited to, storage, demultiplexing, and indexing. The encrypted transport stream may be stored on at least one of PC 125 and STB 135 at subscriber location 120, for subsequent processing or decrypting. Demultiplexing of the transport stream may be implemented to extract at least one of a video elementary stream and an audio elementary stream at a client device serving as media center (*i*.*e*., data repository and playback machine). Indexing payload data of the transport stream may be implemented to enable trick modes at a client device serving as a PVR. Trick modes refer to the ability for a PVR to playback recorded media content forward or backward at various speeds, pause data being recorded or displayed, display a still-frame image, and find a desired reference point in the recorded media content. In addition, indexing payload data of the transport stream may be implemented by a rendering analysis module to extract desired thumbnail images from the video elementary stream.

The analysis at block 210 to determine which portions of the transport stream are to pass unencrypted may be performed dynamically. That is, the analysis may be performed based on a statistical model for one or more processes to determine how much data is needed to implement the one or more processes. Alternatively, the analysis may be performed on more of a case-by-case basis, and therefore the determination is made on the basis of a dynamic examination of the content of each packet within the transport stream.

By one example embodiment, the analysis at block 210 is performed to find the packetized elementary stream (PES) header and to determine the maximum incursion past header data for a particular packet necessary for implementing a process. That is, the incursion into the PES payload data gleans a certain number of bytes of data for implementing a process on the entire transport stream. The bytes of data incurred upon may be referred to as the "extra header data." The PES header and the "extra header data" are to pass encrypted, so the incursion is kept to a minimum so as not to diminish the effectiveness of encryption.

Encryption is applied to a transport stream on a packet-by-packet basis. That is, the payload data of a packet is either entirely encrypted or entirely unencrypted. If the analysis at block 210 determines that any byte from the payload data of a packet is to pass unencrypted, then the entire payload data packet is to pass unencrypted. Otherwise, the entire payload data packet is encrypted. The identity, location, and corresponding process of the unencrypted packets may be contained in an encryption method packet to be revealed to a module for processing the transport stream. Encryption method packets are described further below.

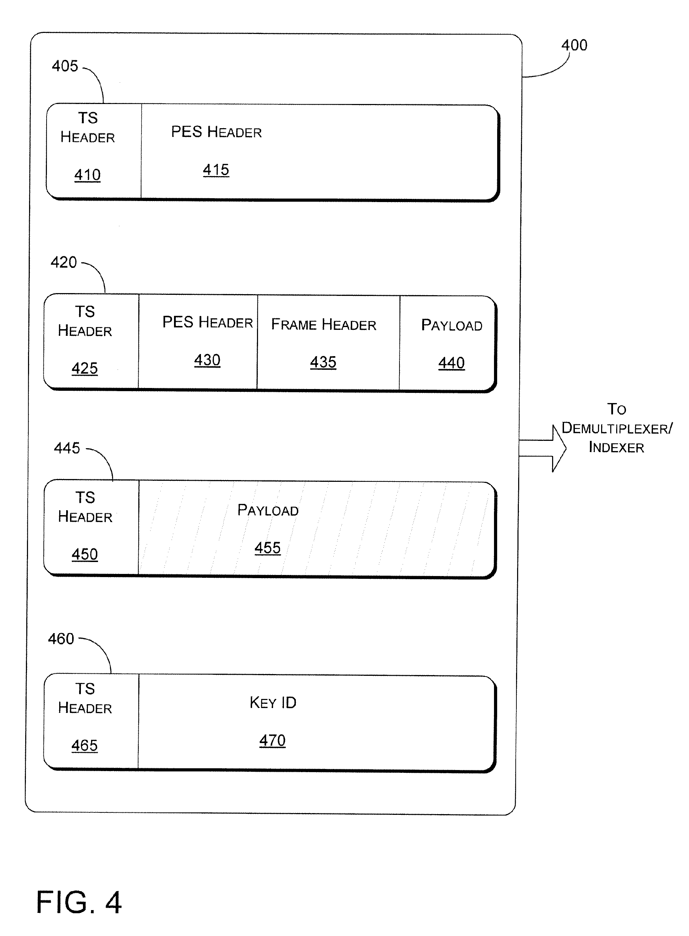

Thus, the analysis at block 210 may incorporate predetermined acknowledgements that any packet within the transport stream that contains any header information is to pass unencrypted. More particularly, a packet containing any portion of PES header information or any portion of the "extra header data" is to pass unencrypted. A description of such packets and header information is provided below with reference to FIG. 4.

Block 215 indicates an action to apply common scrambling to the portions of the transport stream that are not to pass unencrypted based on results of the analysis performed at block 210. Therefore, the portions of the transport stream that are to pass unencrypted remain in the clear (*i.e.*, unencrypted).

According to one example embodiment of an MPEG-2 packetized transport stream, such portions that are to pass unencrypted include any packet containing any portion of PES header information or any portion of the "extra header data." Thus, the packets that are to have common scrambling applied thereto are those packets wholly composed of PES payload data.

Since any portion of the transport stream may pass unencrypted, further alternate embodiments may contemplate frame headers and PES headers having common scrambling applied thereto if the data contained therein is not required for processing the transport stream without descrambling.

Examples of scrambling applied to the encrypted packets include an advanced encryption standard (AES) in a cipher-block chaining (CBC) mode or a counter (CTR) mode. Those skilled in the art should further understand that when using CBC mode, the example utilizes cipher-text stealing on the encrypted transport stream packets to avoid padding or leaving residual data unencrypted. It is to be appreciated that such examples of common scrambling are by way of example only, and are not intended to be (nor should they be construed to be) limiting in any manner. For instance, additional block cipher modes that may be implemented include, but are not limited to, electronic codebook (ECB) mode, cipher feedback (CFB) mode, and output feedback (OFB) mode.

Block 220 indicates an action to generate an encryption method packet. An encryption method packet may provide identification for the encryption algorithm utilized on the encrypted portion of the transport stream, provide data needed for an authorized decrypter to deduce a decryption key, and identify either those portions of the transport stream that pass unencrypted or identify those portions of the transport stream that are encrypted. An encryption method packet may include further data identifying which portions of the encrypted stream are required for respective processes (demultiplexing or indexing for trick modes or thumbnail extraction). Further still, an encryption method packet is inserted in compliance with the multiplexed transport stream.

An encryption method packet may be generated in correspondence with all encrypted portions of a transport stream. Alternatively, encryption method packets may be generated in correspondence with individual packets or bytes of encrypted PES payload data. Thus, an encryption method packet may be generated in correspondence with each PES header in a transport stream, in correspondence with a predetermined number of PES headers in a transport stream, or in correspondence with a predetermined pattern of packets that pass unencrypted for other processes.

Further, embodiments do not require that an encryption method packet be inserted into the transport stream. Since an encryption method packet is not needed until a point of decryption, an encryption method packet may be transmitted to a processor in-band or out-of-band (by a private table), so long as it is received by the processor by the point of decryption. In addition, an encryption method packet may be transmitted to a content usage license that is then transmitted in-band or out-of-band to a processor.

Block 225 indicates an action to process the transport stream in a manner that bypasses encrypted portions of the transport stream. As indicated previously, any process that requires decryption of the transport stream is costly in terms of device resources and security. Common scrambling enables processing at block 225 in a manner that does not require decryption of the encrypted packets. Processing such as demultiplexing or indexing may be implemented on the partially encrypted transport stream based on the data found in the unencrypted portions of the transport stream. In one of the present MPEG-2 example embodiments, such unencrypted portions of the transport stream include any packet containing a portion of a PES header or a portion of the "extra header data." In further alternative embodiments, such unencrypted portions of the transport stream include frame headers arbitrarily located throughout the encrypted PES payload data.

Block 230 indicates an action to render the payload data contained in the transport stream. As indicated previously, rendering requires that transport stream data be decrypted, and therefore the identifying data contained in the encryption method packet is needed at this point. Upon decryption, the payload data contained in the transport stream may be experienced (*i.e.*, viewed and/or heard) by a user of PC 125 or TV 145.

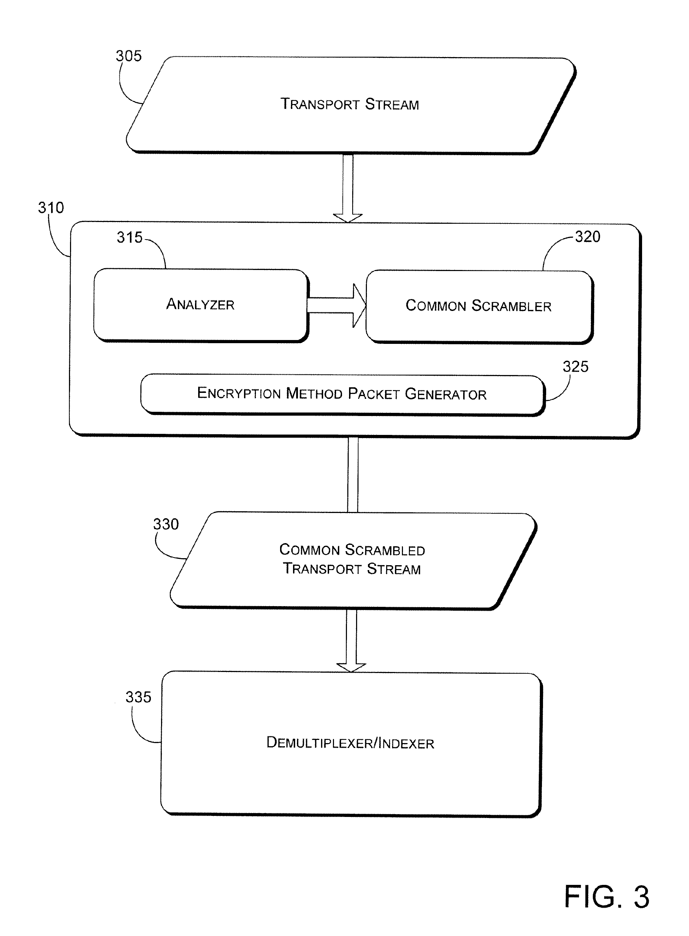

FIG. 3 shows a block diagram corresponding to an apparatus that implements common scrambling according to an example embodiment. Though various changes and modifications will become apparent to those skilled in the art from the present description, the example of FIG. 3 may be applicable to the common scrambling examples of FIG. 1, *i.e.*, common scrambling 105 at content source 100, common scrambling 130 at PC 125, and common scrambling 140 at STB 135. Furthermore, though the example apparatus of FIG. 3 executes the actions of FIG. 2, the described and illustrated order of such actions is by way of example only and is not intended (nor should it be construed) to be limiting.

FIG. 3 depicts a transport stream 305 being received by encrypting module 310. At content source 100, transport stream 305 is received by encrypting module 310 as an unencrypted stream of media content. At any subsequent location, whether at broadcast network 110, head-end 115, or subscriber location 120 (utilizing at least one of PC 125 and STB 135), transport stream 305 is received by encrypting module 310 as an encrypted transport stream, and subsequently has its encryption removed.

Encrypting module 310 is described herein as including modules corresponding to analyzer 315, common scrambler 320, and encryption method packet generator 325. These modules may be disposed within a common substrate or in various combinations of substrates.

Analyzer 315 receives unencrypted transport stream 305, and determines which portions of transport stream 305 are to pass unencrypted based upon the data requirements for at least one process to which the transport stream may be subjected after being encrypted. The determination of which portions of transport stream 305 are to pass unencrypted may be performed based on a statistical model for at least one process, with the statistical model indicating an amount of data that is needed to implement the process. Alternatively, the determination may be performed dynamically, based on a dynamic analysis of the content of each packet within transport stream 305.

By one example embodiment, analyzer 315 determines the depth of an incursion into the payload data of the transport stream required to gather information necessary for implementing a process on the entire transport stream. The bytes of data incurred upon in the payload data comprise the "extra header data," and the "extra header data" are to pass unencrypted. By another example embodiment, analyzer 315 identifies the frame headers that contain information necessary for implementing a process on the entire transport stream. The frame headers may be disposed arbitrarily throughout the payload data of the transport stream, and are to pass unencrypted.

By one example embodiment, the analyzer 315 pre-acknowledges that any packet within the transport stream that contains any header information is to pass unencrypted. More particularly, any packet containing any portion of PES header information or any portion of the "extra header data" is to pass unencrypted. In further alternative embodiments, the analyzer 315 pre-acknowledges that any data necessary for processing the transport stream arbitrarily disposed throughout the PES payload data is to pass unencrypted.

Common scrambler 320 applies common scrambling to the portions of transport stream 305 that are not to pass unencrypted. Thus, m one of the present MPEG-2 examples, packets containing only PES payload data other than the "extra header data" are common scrambled, while the packets left unencrypted include packets containing any portion of PES header information or any portion of the "extra header data" information.

The common scrambling applied to the packets composed of PES payload data includes the aforementioned AES in a cipher block mode (*i.e.,* CBC, CTR, ECB, CFB, and OFB).

Encryption method packet generator 325 generates an encryption method packet in compliance with the protocol of transport stream 305. The generated encryption method packet may provide identification for the algorithm utilized by common scrambler 320, provide data needed for an authorized processor to deduce a decryption key, and identify either those portions of the transport stream that pass unencrypted or identify those portions of the transport stream that are encrypted. With regard to the alternative embodiments in which the PES payload data contains unencrypted, arbitrarily located data that are necessary for processing the corresponding transport stream, the encryption method packet identifies the unencrypted data, their location within the PES payload data, and the process associated with the data. Furthermore, the encryption method packet may include further data identifying which portions of the encrypted stream are required for respective processes (demultiplexing or indexing for trick modes or thumbnail extraction).

The encryption method packet may be generated in correspondence with all encrypted portions of transport stream 305, in correspondence with individual packets of encrypted PES payload data, or in correspondence with a predetermined pattern of packets that pass unencrypted for other processes. Thus, encryption method packet generator 325 may generate an encryption method packet to correspond with each PES header in transport stream 305 with the occurrence of a predetermined number of PES headers in transport stream 305, or with the occurrence of a predetermined pattern of packets left unencrypted for other processes.

Encrypting module 310 thus produces common scrambled transport stream 330. By one MPEG-2 example embodiment, common scrambled transport stream 330 includes unencrypted and encrypted packets. The unencrypted packets include those containing any portion of a PES header and any portion of the "extra header data." The encrypted packets include those containing PES payload data exclusively. It is to be appreciated that these examples of encrypted and unencrypted packets are not intended to be limiting, as modifications to the data required for implementing processes without decrypting unencrypted portions of common scrambled transport stream 330 may arise. Thus, no such constraints are implied, and none should be inferred.

Common scrambled transport stream 330 may or may not include the encryption method packet generated by encryption method packet generator 325. That is, since an encryption method packet is not needed until a point of decryption, the encryption method packet may be transmitted to a decrypter in-band or out-of-band, so long as it is received by the decrypter by the point of decryption. In addition, an encryption method packet may be transmitted to a content usage license that is then transmitted in-band or out-of-band to a processor.

Demultiplexer/Indexer 335 processes common scrambled transport stream 330 in a manner that bypasses the encrypted portions of common scrambled transport stream 330. The example processes of demultiplexing and indexing may be implemented on common scrambled transport stream 330 using the unencrypted portions of common scrambled transport stream 330. In one of the present MPEG-2 example embodiments, the unencrypted portions of common scrambled transport stream 330 include any packet containing a PES header or the "extra header data." Accordingly, the resources of the demultiplexer/indexer 335 are preserved, thus providing more robust processing; and the security of the payload data of common scrambled transport stream 330 is preserved, as well.

FIG. 4 shows packetized transport stream 400 in accordance with an example embodiment. The example transport stream 400 includes packets 405, 420, 445, and 460.

With reference to the broadcast and processing environment of FIG. 1, transport stream 400 has its encryption removed, prior to the common scrambling according to the embodiments described herein, at any one of content source 100, broadcast network 110, head-end 115, or receiver location 120 (by PC 125 or STB 135). In order for processing such as demultiplexing and indexing to be performed on transport stream 400 without requiring the entirety of transport stream 400 be decrypted, portions of transport stream 400 are to pass unencrypted.

The determination of which portions of transport stream 400 are to pass unencrypted is based upon the data requirements for at least one process to which the transport stream may be subjected after being encrypted. The determination may be performed based on a statistical model for at least one process that is indicative of amount of data that is needed to implement at least one process, or the determination may be performed dynamically based on a dynamic analysis of the content of each packet within transport stream 400.

It is pre-acknowledged by any client device processing transport stream 400 that any packet within the transport stream that contains any header information is to pass unencrypted. More particularly, any packet containing any portion of PES header information 430 or any portion of a frame header 435 is to pass unencrypted. What is left to be determined is the depth of the frame header's incursion into the payload data (440 and 455) of transport stream 400 to glean information for implementing a desired process on transport stream 400. Thus, to lessen the burden on the resources of the client device, it is determined that any packet with only payload data 455 is to be common scrambled. Thus, packets 405 and 420 are left in the clear, and packet 445 is common scrambled. The common scrambling applied to packet 445 includes an AES in a CBC or CTR mode.

By an alternate embodiment, any byte of data within payload data (440 and 445) that is required for processing the transport stream is to pass unencrypted. The rest of the payload data, then, is to be encrypted since it is not required to be in the clear for processing the transport stream. Thus, even further alternate embodiments may contemplate encrypting header data that is not required for processing the transport stream.

Encryption method packet 460 is multiplex-compliant with packets 405, 420, and 445. Encryption method packet 460 may identify the algorithm utilized in common scrambling transport stream 400, provides decryption key 470, and further identifies either those portions of transport stream 400 that pass unencrypted or those that are encrypted.

Further, encryption method packet 460 may be inserted into transport stream 400 or may be transmitted to demultiplexer/indexer 335 separately in-band or out-of-band (via private table). The identification information in the encryption method packet may be delivered to a content usage license that is transmitted out-of-band to a processor.

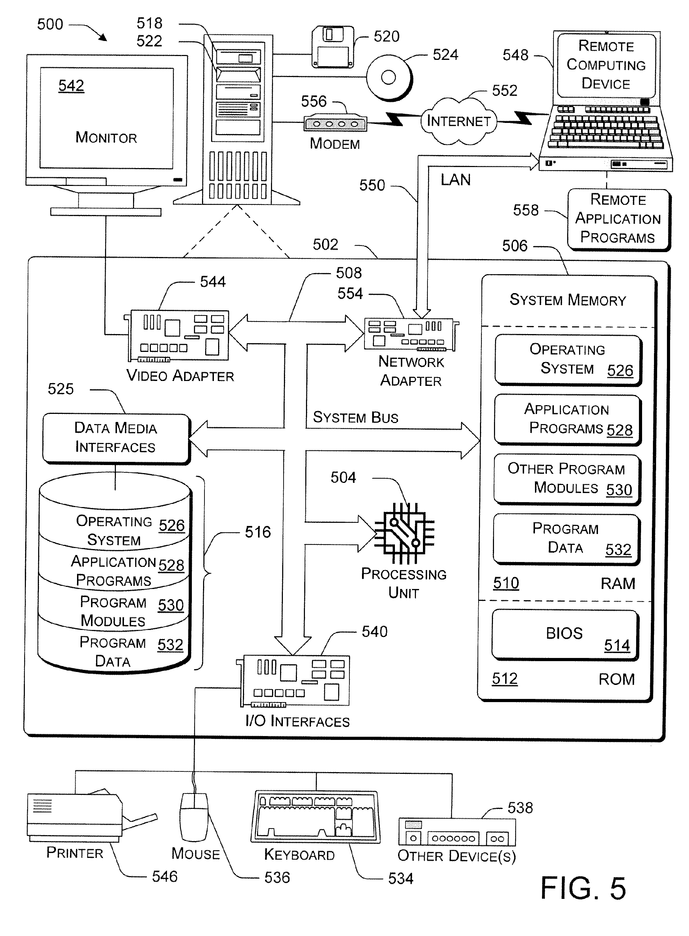

FIG. 5 illustrates a general computer environment 500, which can be used to implement the techniques described herein. The computer environment 500 is only one example of a computing environment and is not intended to suggest any limitation as to the scope of use or functionality of the computer and network architectures. Neither should the computer environment 500 be interpreted as having any dependency or requirement relating to any one or combination of components illustrated in the example computer environment 500.

Computer environment 500 includes a general-purpose computing device in the form of a computer 502, which may correspond to PC 125 (see FIG. 1) or even STB 135. The components of computer 502 can include, but are not limited to, one or more processors or processing units 504, system memory 506, and system bus 508 that couples various system components including processor 504 to system memory 506.

System bus 508 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, a Peripheral Component Interconnects (PCI) bus also known as a Mezzanine bus, a PCI Express bus, a Universal Serial Bus (USB), a Secure Digital (SD) bus, or an IEEE 1394, i.e., FireWire, bus.

Computer 502 may include a variety of computer readable media. Such media can be any available media that is accessible by computer 502 and includes both volatile and non-volatile media, removable and non-removable media.

System memory 506 includes computer readable media in the form of volatile memory, such as random access memory (RAM) 510; and/or non-volatile memory, such as read only memory (ROM) 512 or flash RAM. Basic input/output system (BIOS) 514, containing the basic routines that help to transfer information between elements within computer 502, such as during start-up, is stored in ROM 512 or flash RAM. RAM 510 typically contains data and/or program modules that are immediately accessible to and/or presently operated on by processing unit 504.

Computer 502 may also include other removable/non-removable, volatile/non-volatile computer storage media. By way of example, FIG. 5 illustrates hard disk drive 516 for reading from and writing to a non-removable, non-volatile magnetic media (not shown), magnetic disk drive 518 for reading from and writing to removable, non-volatile magnetic disk 520 (*e.g.*, a "floppy disk"), and optical disk drive 522 for reading from and/or writing to a removable, non-volatile optical disk 524 such as a CD-ROM, DVD-ROM, or other optical media. Hard disk drive 516, magnetic disk drive 518, and optical disk drive 522 are each connected to system bus 508 by one or more data media interfaces 525. Alternatively, hard disk drive 516, magnetic disk drive 518, and optical disk drive 522 can be connected to the system bus 508 by one or more interfaces (not shown).

The disk drives and their associated computer-readable media provide non-volatile storage of computer readable instructions, data structures, program modules, and other data for computer 502. Although the example illustrates a hard disk 516, removable magnetic disk 520, and removable optical disk 524, it is appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the example computing system and environment.

Any number of program modules can be stored on hard disk 516, magnetic disk 520, optical disk 524, ROM 512, and/or RAM 510, including by way of example, operating system 526, one or more application programs 528, other program modules 530, and program data 532. Each of such operating system 526, one or more application programs 528, other program modules 530, and program data 532 (or some combination thereof) may implement all or part of the resident components that support the distributed file system.

A user can enter commands and information into computer 502 via input devices such as keyboard 534 and a pointing device 536 (e.g*.*, a "mouse"). Other input devices 538 (not shown specifically) may include a microphone, joystick, game pad, satellite dish, serial port, scanner, and/or the like. These and other input devices are connected to processing unit 504 via input/output interfaces 540 that are coupled to system bus 508, but may be connected by other interface and bus structures, such as a parallel port, game port, or a universal serial bus (USB).

Monitor 542 or other type of display device can also be connected to the system bus 508 via an interface, such as video adapter 544. In addition to monitor 542, other output peripheral devices can include components such as speakers (not shown) and printer 546 which can be connected to computer 502 via I/O interfaces 540.

Computer 502 can operate in a networked environment using logical connections to one or more remote computers, such as remote computing device 548. By way of example, remote computing device 548 can be a PC, portable computer, a server, a router, a network computer, a peer device or other common network node, and the like. Remote computing device 548 is illustrated as a portable computer that can include many or all of the elements and features described herein relative to computer 502. Alternatively, computer 502 can operate in a non-networked environment as well.

Logical connections between computer 502 and remote computer 548 are depicted as a local area network (LAN) 550 and a general wide area network (WAN) 552. Such networking environments are commonplace in offices, enterprise-wide computer networks, intranets, and the Internet.

When implemented in a LAN networking environment, computer 502 is connected to local network 550 via network interface or adapter 554. When implemented in a WAN networking environment, computer 502 typically includes modem 556 or other means for establishing communications over wide network 552. Modem 556, which can be internal or external to computer 502, can be connected to system bus 508 via I/O interfaces 540 or other appropriate mechanisms. It is to be appreciated that the illustrated network connections are examples and that other means of establishing at least one communication link between computers 502 and 548 can be employed.

In a networked environment, such as that illustrated with computing environment 500, program modules depicted relative to computer 502, or portions thereof, may be stored in a remote memory storage device. By way of example, remote application programs 558 reside on a memory device of remote computer 548. For purposes of illustration, applications or programs and other executable program components such as the operating system are illustrated herein as discrete blocks, although it is recognized that such programs and components reside at various times in different storage components of computing device 502, and are executed by at least one data processor of the computer.

Various modules and techniques may be described herein in the general context of computer-executable instructions, such as program modules, executed by one or more computers or other devices. Generally, program modules include routines, programs, objects, components, data structures, etc. for performing particular tasks or implement particular abstract data types. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. As a non-limiting example only, communication media includes wired media such as a wired network or direct-wired connection, and wireless media such as acoustic, RF, infrared, and other wireless media. Combinations of any of the above are also included within the scope of computer readable media.

Reference has been made throughout this specification to "one embodiment," "an embodiment," or "an example embodiment" meaning that a particular described feature, structure, or characteristic is included in at least one embodiment of the present invention. Thus, usage of such phrases may refer to more than just one embodiment. Furthermore, the described features, structures, or characteristics may be combined in any suitable manner in one or more embodiments.

One skilled in the relevant art may recognize, however, that the invention may be practiced without one or more of the specific details, or with other methods, resources, materials, etc. In other instances, well known structures, resources, or operations have not been shown or described in detail merely to avoid obscuring aspects of the invention.

While example embodiments and applications of the present invention have been illustrated and described, it is to be understood that the invention is not limited to the precise configuration and resources described above. Various modifications, changes, and variations apparent to those skilled in the art may be made in the arrangement, operation, and details of the methods and systems of the present invention disclosed herein without departing from the scope of the claimed invention.

## Claims

1. A method, comprising:
analyzing a transport stream; and
preparing the transport stream for processing that bypasses encrypted portions of the transport stream.

2. A method according to Claim 1, wherein analyzing the transport stream includes determining which portions of the transport stream are to pass unencrypted.

3. A method according to Claim 2, wherein determining which portions of the transport stream are to pass unencrypted is executed based on a statistical analysis.

4. A method according to Claim 2, wherein determining which portions of the transport stream are to pass unencrypted is executed dynamically.

5. A method according to Claim 2, wherein determining which portions of the transport stream are to pass unencrypted includes determining a permissible incursion beyond a packet header to gather data for the processing.

6. A method according to Claim 2, wherein determining which portions of the transport stream are to pass unencrypted includes detecting a data packet containing at least a portion of a packetized elementary stream (PES) header.

7. A method according to Claim 2, wherein determining which portions of the transport stream are to pass unencrypted includes detecting bytes of data that are required for processing the transport stream.

8. A method according to Claim 1, wherein preparing the transport stream for processing includes encrypting portions of the transport stream that are not to pass unencrypted.

9. A method according to Claim 1, wherein preparing the transport stream for processing includes encrypting packets containing PES payload data.

10. A method according to Claim 1, wherein preparing the transport stream for processing includes leaving a packet containing a portion of a frame header unencrypted.

11. A method according to Claim 1, wherein preparing the transport stream for processing includes leaving bytes of data unencrypted that are required for processing the transport stream.

12. A method according to Claim 1, wherein preparing the transport stream for processing includes common scrambling packets composed of PES payload data.

13. A method according to Claim 1, wherein preparing the transport stream for processing includes:
generating a multiplex-compliant encryption method packet; and
inserting the multiplex-compliant encryption method packet into the transport stream.

14. A method according to Claim 13, wherein the encryption method packet identifies an encryption algorithm used in preparing the transport stream for processing, identifies encrypted portions of the transport stream, and provides data for deriving a decryption key.

15. A method according to Claim 13, wherein the encryption method packet identifies an unencrypted portion of the transport stream, a location of the encrypted portion of the unencrypted portion of the transport stream, and a process corresponding to the unencrypted portion of the transport stream.

16. A method according to Claim 13, wherein the encryption method packet is delivered via a private table.

17. A method, comprising:
receiving a partially encrypted transport stream; and
processing the transport stream in a manner that bypasses encrypted portions of the transport stream.

18. A method according to Claim 17, further comprising:
receiving a multiplex-compliant encryption method packet corresponding to the transport stream; and
decrypting encrypted portions of the transport stream using a decryption key.

19. A method according to Claim 18, wherein the decryption key is included in the encryption method packet or is received in an out-of-band message.

20. A method according to Claim 17, wherein processing the transport stream includes demultiplexing the transport stream based on unencrypted portions of the transport stream.

21. A method according to Claim 17, wherein processing the transport stream includes indexing payload data contained in the transport stream based on unencrypted portions of the transport stream.

22. A computer-readable medium having one or more instructions that are executable by one or more processors, the one or more instructions causing the one or more processors to:
determine which portions of a transport stream are to pass unencrypted for processing that disregards encrypted portions of the transport stream; and
prepare the transport stream for the processing.

23. A computer-readable medium according to Claim 22, wherein the one or more instructions to determine which portions of the transport stream are to pass unencrypted cause the one or more processors to leave unencrypted data packets having at least a portion of a PES header.

24. A computer-readable medium according to Claim 22, wherein the one or more instructions to determine which portion of the transport stream are to pass unencrypted cause the one or more processors to leave unencrypted bytes of data required for processing the transport stream.

25. A computer-readable medium according to Claim 22, wherein the one or more instructions to determine which portions of the transport stream are to pass unencrypted cause the one or more processors to leave unencrypted a threshold amount of data beyond packet header data that is relevant for the processing.

26. A computer-readable medium according to Claim 22, wherein the one or more instructions to prepare the transport stream for the processing cause the one or more processors to encrypt portions of the transport stream that are not to pass unencrypted.

27. A computer-readable medium according to Claim 26, wherein the one or more instructions causing the one or more processors to encrypt portions of the transport stream applies an advanced encryption standard (AES)-counter (CTR) mode cipher.

28. A computer-readable medium according to Claim 26, comprising one or more further instructions causing the one or more processors to:
generate a multiplex-compliant encryption method packet; and
insert the multiplex-compliant encryption method packet into the transport stream.

29. A computer-readable medium according to Claim 22, wherein the encryption method packet identifies an encryption algorithm used to prepare the transport stream for processing, identifies encrypted portions of the transport stream, and provides at least a basis for key to decrypt the encrypted portions of the transport stream.

30. A computer-readable medium according to Claim 22, wherein the encryption method packet identifies an unencrypted portion of the transport stream, a location of the unencrypted portion of the transport stream, and a process associated with the unencrypted portion of the transport stream.

31. A computer-readable medium having one or more instructions that are executable by one or more processors, the one or more instructions causing the one or more processors to:
receive a partially encrypted transport stream; and
process the transport stream based on unencrypted portions of the transport stream.

32. A computer-readable medium according to Claim 31, comprising one or more further instructions causing the one or more processors to:
receive a multiplex-compliant encryption method packet corresponding to the transport stream; and
decrypt encrypted portions of the transport stream using an encryption key based in the encryption method packet.

33. A computer-readable medium according to Claim 31, wherein the one or more instructions to process the transport stream cause the one or more processors to demultiplex the transport stream based on unencrypted portions of the transport stream.

34. A computer-readable medium according to Claim 31, wherein the one or more instructions to process the transport stream cause the one or more processors to index payload data contained in the transport stream based on unencrypted portions of the transport stream.

35. An apparatus, comprising:
an analyzer to determine which portions of a transport stream are to pass unencrypted for processing that does not incorporate encrypted portions of the transport stream; and
a scrambler to encrypt other portions of the transport stream based on the determination.

36. An apparatus according to Claim 35, wherein the analyzer is to dynamically determine that a threshold incursion into payload data is to pass unencrypted in order to process the transport stream without removing the encryption from other portions of the transport stream.

37. An apparatus according to Claim 35, wherein the analyzer is to determine that a packet containing at least a portion of a PES header is to pass unencrypted.

38. An apparatus according to Claim 35, wherein the analyzer is to determine that data arbitrarily disposed throughout PES payload data are to pass unencrypted.

39. An apparatus, comprising:
means for determining which portions of a transport stream are to pass unencrypted for processing that does not incorporate encrypted portions of the transport stream; and
means for encrypting other portions of the transport stream in accordance with the analysis.

40. An apparatus according to Claim 39, wherein the means for determining designates a dynamically determined amount of payload data to pass unencrypted in order to process the transport stream without removing the encryption from other portions of the transport stream.
